Europäisches Patentamt

European Patent Office

Office européen des brevets

(11) Veröffentlichungsnummer: **0 234 423 B1**

# EUROPÄISCHE PATENTSCHRIFT

(45) Veröffentlichungstag der Patentschrift: **28.08.91**

(51) Int. Cl.⁵: **B60S 9/02**

(21) Anmeldenummer: **87101962.6**

(22) Anmeldetag: **12.02.87**

(54) **Höhenverstellbare Stütze für Sattelanhänger.**

(30) Priorität: **14.02.86 DE 3604596**

(43) Veröffentlichungstag der Anmeldung:
**02.09.87 Patentblatt 87/36**

(45) Bekanntmachung des Hinweises auf die
Patenterteilung:
**28.08.91 Patentblatt 91/35**

(84) Benannte Vertragsstaaten:
**BE ES FR GB IT NL**

(56) Entgegenhaltungen:
**DE-A- 2 006 379**
**DE-A- 2 500 991**
**DE-A- 3 119 359**
**US-A- 3 666 290**

(73) Patentinhaber: **Haacon Hebetechnik GmbH**
**Josef-Haamann-Strasse 6**
**W-6982 Freudenberg/Main(DE)**

(72) Erfinder: **Riedl, Reinhold**
**Von-Berlichingen-Strasse 3**
**W-8760 Miltenberg(DE)**

(74) Vertreter: **Fuchs, Richard**
**Kantstrasse 18**
**W-8700 Würzburg(DE)**

## Beschreibung

Die Erfindung bezieht sich auf eine höhenverstellbare Stütze für Sattelanhänger, insbesondere mittels Handkurbel betätigbare Stütze mit einer Fußplatte, die durch Gelenk-oder Drehlagerteile gelenkig bzw. schwenkbar mit dem ausfahrbaren Stützenteil verbunden ist.

Derartige Stützen sind an der Unterseite von Sattelanhängern in deren vorderen Bereich in der Regel paarweise angeordnet und kommen immer dann zum Einsatz, wenn der Sattelanhänger von seiner Zugmaschine getrennt und für sich abgestellt wird. Bei luftgefederten Sattelanhängern ist es dabei bekannt, daß nach einer mehr oder weniger langen Standzeit (es genügt bereits z.B. eine Nacht) Luft aus den Federn entweicht, was zur Folge hat, daß der Heckbereich des Sattelanhängers absackt, so daß dieser eine schräge bzw. nach hinten geneigte Stellung in bezug auf den Boden einnimmt. Wenn in einem solchen Fall die Stützen des Sattelanhängers gelenkig oder drehbeweglich angeordnete Fußplatten aufweisen, besteht die Gefahr, daß die mit ihren Fußplatten auf dem Boden aufgelagerten Stützen nach vorne nicht ausweichen bzw. auswandern können und dadurch überbelastet werden. Dies kann zum Verbiegen oder Aufreißen des Stützenrohres bzw. Außenrohres der Stützen und der den Stützen zugeordneten Streben führen. Derartige Stützen sind dann schwergängig oder sogar völlig unbrauchbar, wenn nämlich der ausfahrbare Stützenteil im Stützenaußenrohr blockiert ist. Eingerissene Stützen und/oder Streben können bei erneutem Einsatz auch zu schwerwiegenden Unfällen führen.

Es sind auch bereits höhenverstellbare Stützen für Sattelanhänger bekannt, deren ausfahrbare Teile Rollen tragen. Wenn die Rollen dieser Stützen bei abgestelltem Sattelanhänger auf festem Untergrund ruhen, treten zwar die oben genannten Probleme bei einer Schrägstellung des Sattelanhängers infolge eines Luftverlustes aus den Federungen theoretisch nicht auf. Wenn jedoch, was die Regel ist, der Untergrund weniger fest ist und/oder der Sattelanhänger über eine längere Zeit auf seinen Stützen ruht, können sich die Rollen so tief in den Boden eindrücken, daß man auch hier das oben erläuterte Problem bei luftgefederten Hängern hat. Derartige Stützen sind z.B. aus DE-A-2 006 379 bekannt.

Es ist ferner bekannt, zur Ausschaltung der oben geschilderten Schwierigkeiten die Streben der Stützen nachgiebig auszubilden und die Stützen am Hänger gelenkig anzuordnen. Diese Lösung ist jedoch baulich aufwendig und stellt eine so entscheidende Stützenveränderung dar, daß sie zur Nachrüstung nicht geeignet ist.

Der Erfindung liegt die Aufgabe zugrunde, eine höhenverstellbare Stütze für luftgefederte Sattelanhänger zu schaffen, die bei einer Schrägstellung des abgestellten Sattelanhängers infolge eines Luftverlustes aus den Federn nach vorne um ein Ausmaß ausweichen kann, daß eine Beschädigung der Stütze einschließlich ihrer zugeordneten Strebe ausgeschlossen ist. Die zu diesem Zweck an der Stütze vorzunehmenden Maßnahmen sollen baulich einfach und auch für eine Nachrüstung geeignet sein.

Gemäß der Erfindung wird obige Aufgabe dadurch gelöst, daß

a) das fußplattenseitige Gelenk- oder Drehlagerteil an einem Gleitschuh befestigt ist,

b) der Gleitschuh verschieblich auf der Fußplatte angeordnet ist und

c) zwischen dem Gleitschuh und/oder dem mit dem Gleitschuh verbundenen Gelenk- oder Drehlagerteil einerseits und der Fußplatte andererseits ein ringförmiges elastisches Verbindungsteil aus einem gummiartigem Material angeordnet ist, welches den Gleitschuh nach außen abkapselt.

Wenn sich ein luftgefederter, abgestellter Sattelanhänger nach einer gewissen Standzeit infolge des üblichen Luftverlustes in seinen Federn nach hinten neigt, können vorteilhaft die erfindungsgemäß ausgebildeten Stützen nach vorne auswandern bzw. ausweichen, wobei ihre Gleitschuhe sich auf den ortsfest ruhenden Fußplatten entsprechend verschieben. Die Fußplatten behalten dabei ihre ursprüngliche Stellung, in der sie vollflächig auf dem Boden aufliegen. Die Stützen können sich andererseits um das erforderliche Außmaß gegenüber ihren Gleitschuhen bzw. Fußplatten schräg stellen, ohne daß die Gefahr einer Überbelastung der Stützen und ihrer Streben, wie beim Stand der Technik, besteht. Die Erfindung eignet sich vorteilhaft auch für eine einfache Umrüstung bekannter üblicher Stützen, denn eine Auswechslung von Teilen ist lediglich im Bereich der Gelenk- oder Drehlagerteile und der Fußplatte erforderlich. In vorteilhafter Weise kann ferner das ringförmige elastische Verbindungsteil die Fußplatte tragen und dieses Verbindungsteil kann auch ohne weiteres so stark dimensioniert werden, daß es bei Aufhebung der Belastung der Stütze und Fußplatte die erforderliche Rückstellung derselben in eine Mittenstellung zur Stütze bewirkt. Die Abkapselung des Gleitschuhs auf der Fußplatte durch das ringförmige elastische Verbindungsteil bringt ferner den Vorteil, daß die Lagerflächen zwischen Gleitschuh und Fußplatte schmutzfrei gehalten werden, so daß die erforderliche Leichtgängigkeit des Gleitschuhs langzeitig gewährleistet ist.

Weitere Ausgestaltungen der Erfindung gehen aus den Unteransprüchen hervor.

Wenn der Gleitschuh und/oder die mit dem Gleitschuh zusammenwirkende Fläche der Fußplatte mit einer Gleischicht aus Kunststoff, z.B. Tetrafluoräthylen überzogen ist oder zwischen dieser Fläche und dem Gleitschuh eine Kunststofflagerscheibe angeordnet ist, wird die Relativbewegung zwischen Gleitschuh und Fußplatte der Stütze bei einer Stützenwanderung infolge eines Luftverlustes in den Federn des Sattelanhängers zusätzlich begünstigt.

Um eine zu starke Beanspruchung des ringförmigen elastischen Verbindungsteils bei einer entsprechenden Stützenwanderung zu vermeiden, ist es vorteilhaft, wenn nach noch einer anderen Ausgestaltung der Erfindung die Relativbewegung des Gleitschuhs auf der Fußplatte durch Anschläge begrenzt ist.

Noch eine andere Weiterbildung der Erfindung ist dadurch gekennzeichnet, daß die Rückstellung der Fußplatte in ihre Mittenstellung zur Stütze durch zwischen Gleitschuh und Fußplatte angeordnete Schraubenfedern unterstützt bzw. bewirkt wird. Die Schraubenfedern können also das elastisch deformierte ringförmige Verbindungsteil bei Aufhebung der Belastung der Fußplatte zwecks deren Rückstellung unterstützen oder diese Rückstellung auch allein zustande bringen, wenn das elastische Verbindungsteil infolge einer entsprechend schwachen Dimensionierung praktisch keine Rückstellkräfte erzeugen kann.

Die Relativbewegung zwischen Gleitschuh und Fußplatte bei einer Stützenwanderung wird weiter begünstigt, wenn nach noch einer anderen Ausgestaltung der Erfindung der durch das elastische Verbindungsteil und/oder durch daß fußplattenseitige Gelenklagerteil nach außen abgekapselte Raum mit einem Schmiermittel gefüllt wird. Um in diesem Fall einen Schmiermittelverlust durch die Gelenklagerteile hindurch zu vermeiden, ist zweckmäßig zwichen dem mit dem Gleitschuh verbundenen Gelenklagerteil und dem stützenseitigen Gelenklagerteil eine Ringdichtung angeordnet. Die Ringdichtung verhindert auch einen Schmutz- bzw. Wassereintritt.

Wenn es sich bei der Stütze, wie üblich, um eine solche mit einer zentralen Verbindungsschraube mit Mutter zwischen den Gelenklagerteilen handelt und Fußplatte, Gelenklagerteil sowie elastisches Verbindungsteil eine Baueinheit bilden, ist es zur Montage zweckmäßig, wenn der Gleitschuh drehfest einen Käfig zur Halterung und Drehsicherung der Mutter und ggf. einer Federscheibe trägt.

Die Weiterbildung der Erfindung nach Anspruch 8 erleichtert die Gleitbewegung des Gleitschuhs auf der Fußplatte.

Die Ausgestaltungen der Erfindung nach Anspruch 9 oder 10 verhindern im Fahrbetrieb des Sattelanhängers bei eingefahrenen Stützen ein hartes Aufschlagen der Fußplatte gegen den Gleitschuh infolge Erschütterungen. Wenn die Stütze nach Anspruch 11 weitergebildet wird, erreicht man eine besonders wirtschaftliche Fertigung.

Die Erfindung wird anschließend anhand der Zeichnungen von Ausführungsbeispielen erläutert. Es zeigen:

Fig. 1    eine Seitenansicht eines z.B. auf zwei Stützen aufgelagerten Sattelanhängers mit Luftfederung in Normalstellung;

Fig. 2    eine Seitenansicht des auf zwei Stützen aufgelagerten Sattelanhängers der Fig. 1, jedoch nach einem Luftverlust in den Federn und dadurch bedingter Schrägstellung des Sattelanhängers mit nach vorne ausgewanderten Stützen;

Fig. 3    eine Schnittansicht vom unteren Teil einer Stütze nach den Figuren 1 und 2 mit der Fußplatte und dem Gleitschuh in normaler mittiger Stellung in bezug auf die Stützenachse;

Fig. 4    eine der Fig. 3 ähnliche Schnittansicht, in der jedoch die Stütze um das Ausmaß X2 nach vorne ausgewandert ist;

Fig. 5    eine Draufsicht von der rechten Hälfte der Anordnung nach Fig.3 entlang der Linie V - V in Fig.3;

Fig. 6    eine der Fig. 5 ähnliche Draufsicht, jedoch mit einer rechteckigen Fußplatte;

Fig. 7    eine der Fig. 3 ähnliche Schnittansicht vom unteren Teil einer Stütze gemäß der Erfindung, bei der jedoch die Fußplatte im Gegensatz zur Fig. 3 nicht gelenkig, sondern nur drehbeweglich an dem ausfahrbaren Stützenteil gelagert ist und

Fig. 8    eine der Fig. 7 ähnliche Schnittansicht, jedoch von einer Stütze, die um das Ausmaß X2 nach vorne ausgewandert ist.

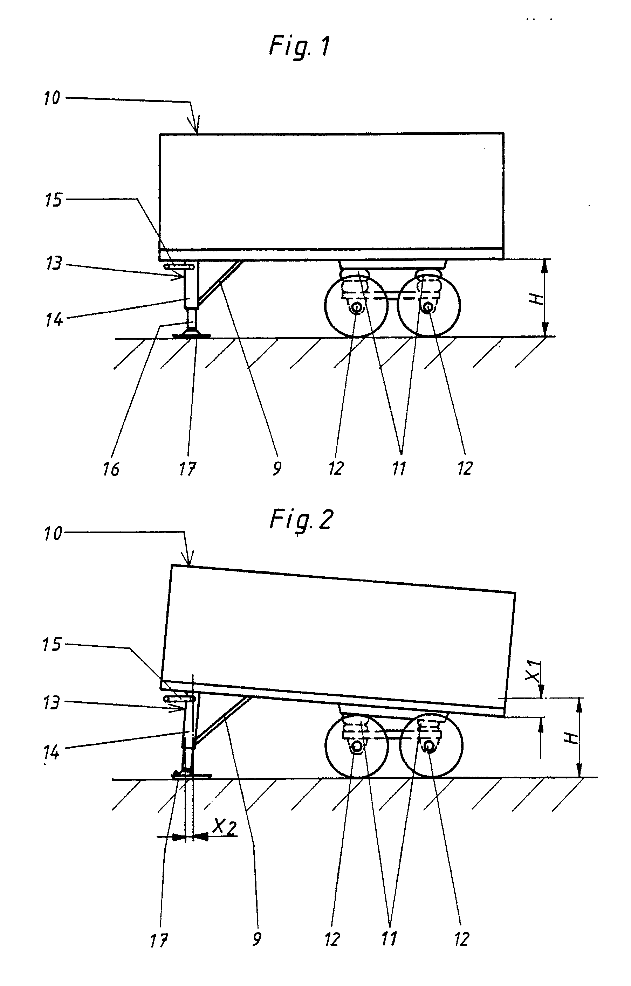

Der in den Figuren 1 und 2 gezeigte Sattelanhänger 10 weist eine Luftfederung 11 für seine zwei Radachsen 12 auf. Im vorderen Bereich des Sattelanhängers 10 sind an seiner Unterseite zwei höhenverstellbare Stützen 13 in seitlichem Abstand voneinander und symmetrisch zur Hänger-Längsachse befestigt. Die Stützen 13 sind beispielsweise als Spindelwinden ausgebildet, welche durch Drehen einer Handkurbel 15 betätigt werden können. Die Stützen 13 weisen im einzelnen ein ortsfestes äußeres rohrförmiges Stützenteil 14 sowie ein inneres aus- bzw. einfahrbares rohrförmiges Stützenteil 16 auf. Zwischen jedem äußeren rohrförmigen Stützenteil 14 und der Unterseite des Sattelanhängers 10 ist eine Strebe 9 angeordnet, die den Stützen 13 zusätzliche Stabilität verleiht, wenn der Sattelanhänger 10 auf den Stützen 13 aufgelagert ist. (Fig.1 und 2).

Unmittelbar nach dem Abhängen des Sattelanhängers 10 von seiner Zugmaschine (nicht gezeigt) und Auflagerung seines vorderen Teils über die beiden Stützen 13 auf dem Boden, nimmt der Sattelanhänger 10 die in Fig. 1 gezeigte Normalstellung ein, in welcher der Abstand H seiner Unterseite zum Boden über die Länge des Hängers im wesentlichen gleich ist. Nach einer gewissen Zeitspanne tritt jedoch in den Luftfedern 11 ein unvermeidlicher Luftverlust auf, der dazu führt, daß der Heckbereich des Sattelanhängers 10 absackt, was die in Fig. 2 gezeigte Schrägstellung des Sattelanhängers 10 zur Folge hat. Der Abstand des Hecks des Sattelanhängers 10 vom Boden beträgt jetzt nur noch H - X1. Im Verlauf dieser allmählich stattfindenden Schrägstellung des Sattelanhängers 10, die in Fig. 2 zur Erleichterung des Verständnisses der Erfindung übertrieben dargestellt ist, wandern die ortsfest angeordneten Stützen 13 um die Strecke X2 nach vorne aus, wobei jedoch aufgrund der erfindungsgemäßen Maßnahmen die Fußplatte 17 jeder Stütze 13 in ihrer ursprünglichen horizontalen Lage auf dem Boden verbleibt.

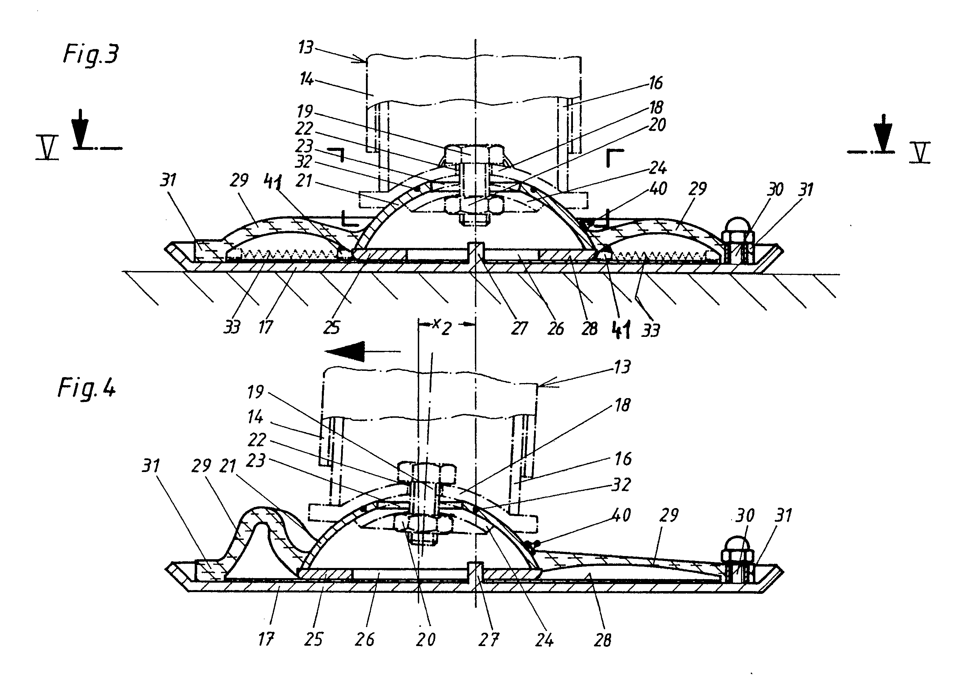

Beim ersten Ausführungsbeispiel nach den Figuren 3 - 6 ist am unteren Ende des aus- bzw. einfahrbaren Stützenteils 16 jeder Stütze 13 ein teller- bzw. kugelkalottenförmiges Gelenklagerteil 18 befestigt, welches durch eine Schraube 19 mit aufgedrehter Mutter 20 mit einem ähnlichen, angepassten Gelenklagerteil 21 beweglich verbunden ist. Das stützenseitige Gelenklagerteil 18 weist eine mittige Bohrung 22 auf, durch welche sich die Schraube 19 nach unten erstreckt, die mit ihrem Kopf am Gelenklagerteil 18 angeschweißt ist. Das fußplattenseitige Gelenklagerteil 21 enthält eine im Durchmesser wesentlich größere zentrale Öffnung 23 für den Durchtritt der Schraube 19, um die erforderliche Relativbewegung der Gelenklagerteile 18 und 21 zu ermöglichen. Zwischen der Mutter 20 und der Innenseite des Gelenklagerteils 21 ist eine Sicherungs-Federscheibe 24 angeordnet. Die Mutter 20 besteht vorzugsweise aus einer selbstarretierenden Ausführung.

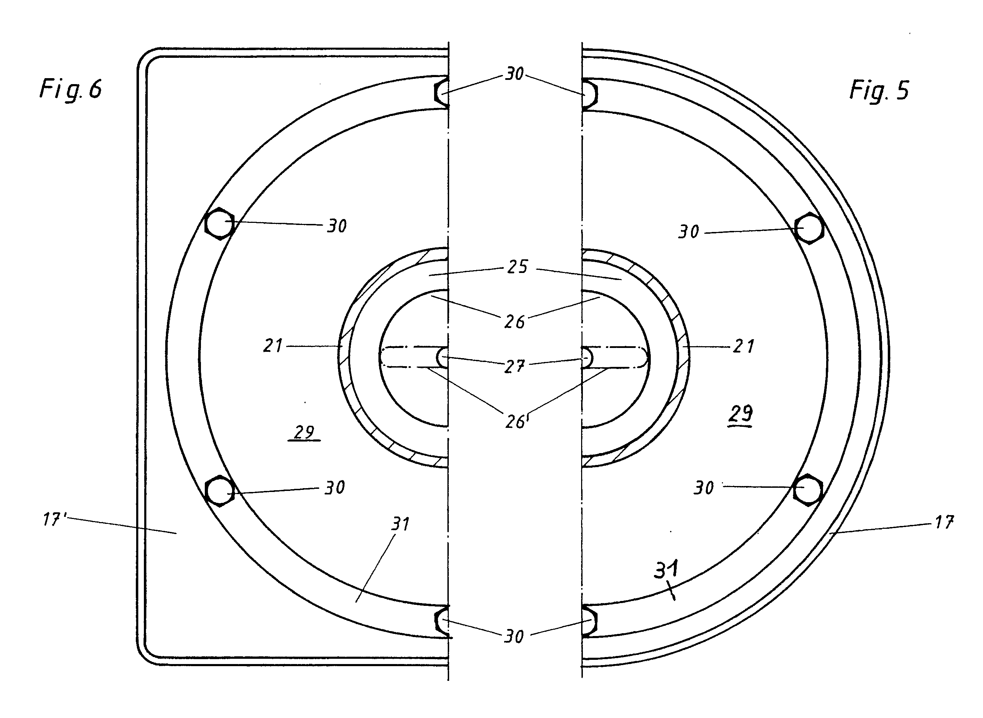

Das fußplattenseitige Gelenklagerteil 21 ist mit seinem Rand an einem Gleitschuh 25 angeschweißt. Der Gleitschuh 25 ist kreisrund und enthält eine mittige kreisrunde Öffnung 26, in die sich ein zapfenförmiger Anschlag 27 an der Fußplatte 17 erstreckt. Die Fußplatte 17 ist an ihrer Innenseite mit einer Gleitschicht 28 aus Kunststoff, z.B. Tetrafluoräthylen überzogen. Ein ringförmiges elastisches Verbindungsteil 29 aus einem gummiartigem Material ist an seinem inneren Umfangsrand mit dem Gleitschuh 25 bzw. mit dem Gelenklagerteil 21 fest verbunden, vorzugsweise durch Anvulkanisieren. Der äußere Umfangsrand des elastischen Verbindungsteils 29 ist durch Schrauben bzw. Schraubenbolzen 30 mit Hutmuttern mit der Fußplatte 17 fest verbunden, wie in den Figuren 3 und 4 rechts und in den Figuren 5 und 6 gezeigt ist. Dieser äußere Rand des elastischen Verbindungsteils 29 kann jedoch auch, wie in den Figuren 3 und 4 links dargestellt ist, an der Fußplatte 17 anvulkanisiert sein. In jedem Fall sind der Gleitschuh 25 und die Gleitschicht 28 durch das ringförmige elastische Verbindungsteil 29 und das Gelenklagerteil 21 nach außen abgekapselt und bleiben somit schmutzfrei. Bemerkt sei noch, daß der Außenrandbereich des Verbindungsteils 29 bei 31 wulstförmig verstärkt ist, wodurch seine Befestigung an der Fußplatte 17 erleichtert wird. Die Fußplatte 17 bzw. 17' (Fig.5,6) weisen z.B. einen kreisrunden bzw. rechteckigen Grundriß auf. Der durch das ringförmige elastische Verbindungsteil 29 und durch das Gelenklagerteil 21 nach außen abgekapselte Raum kann auch mit einem Schmiermittel gefüllt sein, und in diesem Fall ist es zweckmäßig, wenn zwischen den Gelenklagerteilen 18 und 21 ein Dichtungsring 32 angeordnet ist. Mit der Bezugszahl 40 ist ein Schmiernippel am Gelenklagerteil 21 bezeichnet.

Die Fig. 3 zeigt die Fußplatte 17 und den Gleitschuh 25 in ihrer Mittenstellung zur Stütze 13. Die Figur 4 zeigt eine aufgrund einer entsprechenden Schrägstellung des Sattelanhängers 10 infolge Luftverlustes in den Federn 11 nach vorne in Pfeilrichtung um die Strecke X2 ausgewanderte Stütze 13, welche über die Gelenklagerteile 18, 21 auch den Gleitschuh 25 mitgenommen hat, der sich auf der Gleischicht 28 der Fußplatte 17 entsprechend verschoben hat. Die Fußplatte 17 nimmt dagegen noch ihre ursprüngliche in Fig. 3 gezeigte Lage ein, bleibt also ortsfest. Die Relativbewegung zwischen dem Gleitschuh 25 und der Fußplatte 17 wird begrenzt durch den Anschlag 27 der Fußplatte 17, welcher gemäß Fig. 4 in Anlage mit dem Rand der mittigen Öffnung 26 im Gleitschuh 25 steht. Das ringförmige elastische Verbindungsteil 29 ist in der ausgewanderten Stellung der Stütze 13 gemäß Fig. 4 in der linken Hälfte gefaltet und in der rechten Hälfte gestreckt bzw. gedehnt. Wenn die Belastung der Stütze 13 wieder aufgehoben und die Fußplatte 17 frei wird, bewirkt das ringförmige, elastisch deformierte Verbindungsteil 29 eine Rückstellung der Fußplatte 17 in ihre in Fig. 3 gezeigte Mittenstellung in bezug auf die Stütze 13. Diese Rückstellbewegung der Fußplatte 17 kann auch durch Schraubenfedern 33 bewirkt bzw. unterstützt werden, die in Fig. 3 in strichpunktierten Linien angedeutet sind und sich zwischen dem Wulst 31 des elastischen Verbindungsteils 29 und dem Gleitschuh 25 erstrecken. Diese Federn 33 werden bei kreisrunder Fußplatte 17 strahlenförmig symmetrisch verteilt bzw. im Falle einer rechteckigen Fußplatte 17'

kreuzförmig angeordnet.

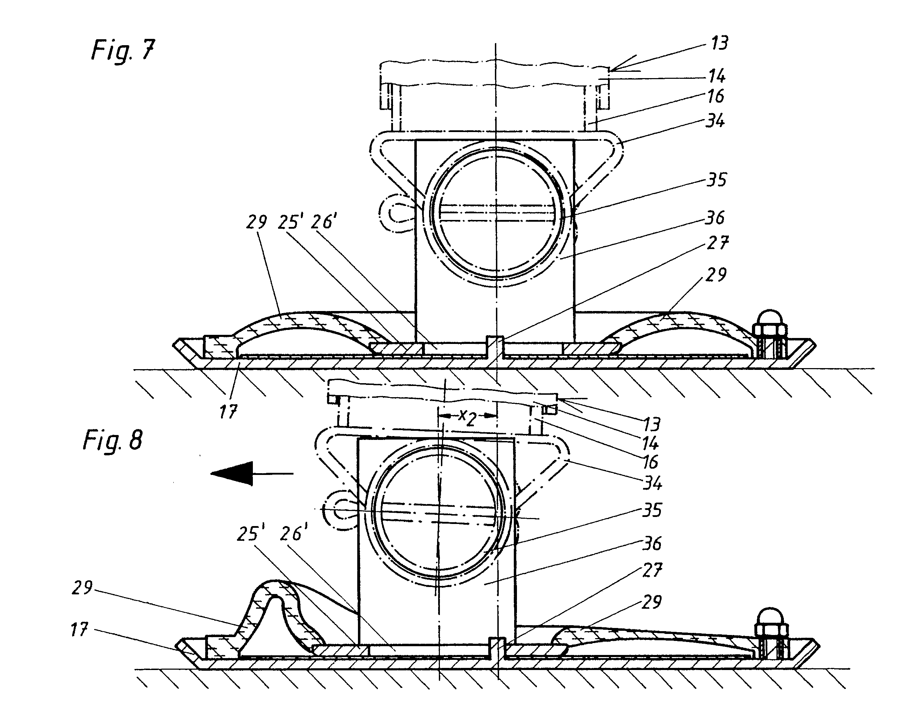

Um bei dem (einstückigen) Ausführungsbeispiel nach den Figuren 3 und 4 sowie nach den Figuren 7 und 8 jeweils links dargestellt die Montage zu ermöglichen, kann mit dem Gleitschuh 25 ein nicht gezeigter Käfig drehfest verbunden sein, der zur Aufnahme und Drehsicherung der Mutter 20 und ggf. der Federscheibe 24 dient, so daß beim Zusammenbau der Gelenklagerteile 18 und 21 die Mutter 20 einfach auf die Schraube 19 aufgeschraubt werden kann.

Während bei der Ausführungsform nach den Figuren 3 und 4 die Fußplatte 17 kugelgelenkartig mit der Stütze 13 verbunden ist und sich der Gleitschuh 25 radial in beliebiger Richtung auf der Fußplatte 17 verschieben kann, ist in den Figuren 7 und 8 eine Version gezeigt, bei welcher die Fußplatte 17 nur schwenkbar mit dem aus- bzw. einfahrbaren Stützenteil 16 verbunden ist. Zu diesem Zweck sind am unteren Ende des Stützenteils 16 Drehlagerteile 34 befestigt, die eine hohle Achse 35 aufnehmen. Die Achse 35 erstreckt sich ferner durch weitere Drehlagerteile 36, die am Gleitschuh 25′ befestigt sind. Im Gegensatz zur Ausführungsform nach den Figuren 3 und 4 weist der Gleitschuh 25′ nur einen Schlitz 26′ (auch in den Fig. 5 und 6 in strichpunktierten Linien angedeutet) auf, in den sich der an der Fußplatte 17 angeordnete Anschlag 27 erstreckt. Der Schlitz 26′ ist rechtwinklig zur Achse 35 angeordnet und verläuft parallel zur Fahrtrichtung, was bedeutet, daß sich bei dieser Version der Gleitschuh 25′ nur in Fahrtrichtung relativ zur Fußplatte 17 verschieben kann. Ansonsten entspricht die Ausführungsform nach den Figuren 7 und 8 derjenigen nach den Figuren 3 und 4 und gleiche Teile sind daher mit den gleichen Bezugszahlen gekennzeichnet. Nach Aufhebung der Belastung der Fußplatte 17 bewirkt auch in diesem Fall das ringförmige, elastisch deformierte Verbindungsteil 29 aufgrund seiner materialeigenen Rückstellkraft die Rückstellung der Fußplatte 17 in die in Fig. 7 gezeigte Mittenstellung zur Stütze 13. In Fig. 8 ist entsprechend Fig. 4 eine nach vorne um die Strecke X2 ausgewandete Stütze 13 gezeigt, bedingt durch eine Schrägstellung des Sattelanhängers 10, wie in Fig.2 angedeutet ist.

Mit 41 ist beispielsweise in Fig. 3 ein umlaufender Dämpfungswulst am elastischen Verbindungsteil 29 bezeichnet, der ein hartes Aufschlagen der Fußplatte 17 gegen den Gleitschuh 25 im Fahrbetrieb des Hängers bei eingefahrenen Stützen 13 dämpft. Der Dämpfungswulst 41 kann durch mehrere Dämpfungsnoppen ersetzt werden.

Wenngleich in den Ausführungsbeispielen eine Stütze 13 beschrieben ist, deren Höhenverstellung durch Betätigung der Handkurbel 15 über ein Windengetriebe erfolgt, wird bemerkt, daß die Antriebsart der Stütze beliebig sein kann und auf die Anwendung der Erfindung keinen Einfluß hat. Es könnten also z.B. auch hydraulisch betätigbare Stützen erfindungsgemäß ausgebildet werden.

**Patentansprüche**

1. Höhenverstellbare Stütze für Sattelanhänger, insbesondere mittels Handkurbel betätigbare Stütze mit einer Fußplatte, die durch Gelenk- oder Drehlagerteile gelenkig bzw. schwenkbar mit dem ausfahrbaren Stützenteil verbunden ist, dadurch gekennzeichnet, daß

a) das fußplattenseitige Gelenk- oder Drehlagerteil (21, 36) an einem Gleitschuh (25) befestigt ist,

b) der Gleitschuh (25) verschieblich auf der Fußplatte (17) angeordnet ist und

c) zwischen dem Gleitschuh (25) und/oder dem mit dem Gleitschuh (25) verbundenen Gelenk- oder Drehlagerteil (21, 36) einerseits und der Fußplatte (17) andererseits ein ringförmiges elastisches Verbindungsteil (29) aus einem gummiartigen Material angeordnet ist, welches den Gleitschuh (25) nach außen abkapselt.

2. Stütze nach Anspruch 1, dadurch gekennzeichnet, daß der Gleitschuh (25) und/oder die mit dem Gleitschuh (25) zusammenwirkende Fläche der Fußplatte (17) mit einer Gleitschicht (28) aus Kunststoff, z. B. Tetrafluoräthylen überzogen ist oder zwischen dieser Fläche und dem Gleitschuh eine Kunststofflagerscheibe angeordnet ist.

3. Stütze nach Anspruch 1 oder 2, dadurch gekennzeichnet, daß die Relativbewegung des Gleitschuhs (25) auf der Fußplatte (17) durch Anschläge (27) begrenzt ist.

4. Stütze nach Anspruch 1, dadurch gekennzeichnet, daß die Rückstellung der Fußplatte (17) in ihre Mittenstellung zur Stütze (13) durch zwischen Gleitschuh (25) und Fußplatte (17) angeordnete Schraubenfedern (33) unterstützt bzw. bewirkt wird.

5. Stütze nach Anspruch 1, dadurch gekennzeichnet, daß der durch das elastische Verbindungsteil (29) und/oder durch das fußplattenseitige Gelenklagerteil (21) nach außen abgekapselte Raum mit einem Schmiermittel gefüllt wird.

6. Stütze nach Anspruch 5, dadurch gekennzeichnet, daß zwischen dem mit dem Gleitschuh (25) verbundenen Gelenklagerteil (21) und dem stützenseitigen Gelenklagerteil (18) eine Ringdichtung (32) angeordnet ist.

7. Stütze nach Anspruch 1 mit einer zentralen Verbindungsschraube mit Mutter zwischen den Gelenklagerteilen, dadurch gekennzeichnet, daß zur Montageerleichterung der Gleitschuh (25) drehfest einen Käfig zur Halterung und Drehsicherung der Mutter (20) und ggf. einer Federscheibe (24) trägt.

8. Stütze nach Anspruch 1, dadurch gekennzeichnet, daß der Gleitschuh (25) an der unteren äußeren Kante abgerundet oder hochgezogen ist.

9. Stütze nach Anspruch 1, dadurch gekennzeichnet, daß das elastische Verbindungsteil (29) drei oder mehr Dämpfungsnoppen aufweist.

10. Stütze nach Anspruch 1, dadurch gekennzeichnet, daß das elastische Verbindungsteil (29) einen umlaufenden Dämpfungswulst (41) aufweist.

11. Stütze nach Anspruch 1, dadurch gekennzeichnet, daß das ringförmige elastische Verbindungsteil (29) aus gummiartigem Material an der Fußplatte (17) und dem Gelenk- oder Drehlagerteil (21, 36) anvulkanisiert ist und diese Teile zusammen mit dem Gleitschuh (25) eine Baueinheit bilden.

## Claims

1. Height-adjustable support for semi-trailers, in particular a crank-handle operated support with a base plate hingedly or swivellably connected to the extendable part of the support by articulated or rotary bearing parts, respectively, characterised in that
    a) the articulated or rotary bearing part (21, 36) located by the base plate is fixed to a sliding shoe (25),
    b) the sliding shoe (25) is slidably arranged on the base plate (17) and
    c) an annular elastic connecting part (29) consisting or rubber-like material, which closes the sliding shoe (25) off from the outside, is arranged between the sliding shoe (25) and/or the articulated or rotary bearing part (21, 36) connected to the sliding shoe (25), on the one hand, and the base plate (17), on the other hand.

2. Support according to claim 1, characterised in that the sliding shoe (25) and/or the surface of the base plate (17) cooperating with the sliding shoe (25) is coated with a sliding layer (28) of plastic, e.g. tetrafluoroethylene, or a plastics bearing disc is arranged between this surface and the sliding shoe.

3. Support according to claim 1 or 2, characterised in that the relative movement of the sliding shoe (25) on the base plate (17) is limited by stops (27).

4. Support according to claim 1, characterised in that the return of the base plate (17) to its central position with respect to the support (13) is assisted or produced by coil springs (33) arranged between the sliding shoe (25) and the base plate (17).

5. Support according to claim 1, characterised in that the space closed off from the outside by the elastic connecting part (29) and/or by the articulated bearing part (21) located by the base plate is filled with a lubricant.

6. Support according to claim 5, characterised in that an annular seal (32) is arranged between the articulated bearing part (21) connected to the sliding shoe (25) and the articulated bearing part (18) located by the support.

7. Support according to claim 1 with a central connecting bolt with a nut between the articulated bearing parts, characterised in that to facilitate assembly the sliding shoe (25) carries fast against rotation a cage for holding and securing against rotation the nut (20) and, if need be, a spring washer (24).

8. Support according to claim 1, characterised in that the sliding shoe (25) is rounded off or drawn up at the lower outer edge.

9. Support according to claim 1, characterised in that the elastic connecting part (29) has three or more damping protuberances.

10. Support according to claim 1, characterised in that the elastic connecting part (29) has an encircling damping bead (41).

11. Support according to claim 1, characterised in that the annular elastic connecting part (29) consisting of rubber-like material is vulcanised on to the base plate (17) and the articulated or rotary bearing part (21, 36) and these parts form a structural unit together with the sliding shoe (25).

## Revendications

1. Chandelle de support, à hauteur réglable pour semi-remorque, notamment chandelle manoeuvrable au moyen d'une manivelle, comportant une semelle qui est articulée sur l'élément télescopique de cette chandelle par des éléments de palier de pivotement ou de palier à rotule, chandelle caractérisée en ce que

a) l'élément (21, 36) de palier à rotule ou de pivotement adjacent à la semelle (17) est fixé à un patin (25) ;

b) ce patin (25) peut se déplacer sur cette semelle (17) ; et

c) un organe (29) de jonction, annulaire et élastique, en une matière caoutchouteuse, qui emprisonne le patin (25), est disposé entre ce patin (25) et/ou l'élément d'articulation (21, 36) qui y est fixé, d'une part, et la semelle (17), d'autre part.

2. Chandelle selon la revendication 1, caractérisée en ce que le patin (25) et/ou la surface coopérant avec lui de la semelle (17) est revêtu(e) d'un enduit (28) antifriction, de tétrafluoréthylène, par exemple, ou bien une plaquette d'appui en matière plastique est disposée entre cette surface et ce patin.

3. Chandelle selon la revendication 1 ou 2, caractérisée en ce que le déplacement relatif du patin (25) sur la semelle (17) est limité par des butées (27).

4. Chandelle selon la revendication 1, caractérisée en ce que le rappel de la semelle (17) à sa position centrée par rapport à la chandelle (13) est assisté ou provoqué par des ressorts hélicoïdaux (33) disposés entre le patin (25) et cette semelle (17).

5. Chandelle selon la revendication 1, caractérisée en ce que l'espace, isolé de l'extérieur par l'organe élastique (29) de jonction et/ou par l'élément (21) d'articulation voisin de la semelle, est rempli d'un lubrifiant.

6. Chandelle selon la revendication 5, caractérisée en ce qu'un joint (32) annulaire est disposé entre l'élément (21) de palier à rotule relié au patin (25) et l'élément (18) de ce palier, qui est adjacent à la chandelle.

7. Chandelle selon la revendication 1, comportant entre les éléments du palier à rotule une vis centrale de liaison portant un écrou, caractérisée en ce que, pour faciliter l'assemblage, le patin (25) porte une cage,qui en est solidaire en rotation et qui est destinée à maintenir et immobiliser en rotation l'écrou (20) et éventuellement une rondelle élastique (24).

8. Chandelle selon la revendication 1, caractérisée en ce que le bord extérieur et inférieur du patin (25) est arrondi ou relevé.

9. Chandelle selon la revendication 1, caractérisée en ce que l'organe (29) élastique de jonction comporte trois ou plus de trois amortisseurs.

10. Chandelle selon la revendication 1, caractérisée en ce que l'organe (29) élastique de jonction comporte tout autour un bourrelet amortisseur (4 ).

11. Chandelle selon la revendication 1, caractérisée en ce que l'organe (29) annulaire et élastique de jonction, réalisé en matière caoutchouteuse, est fixé par vulcanisation sur la semelle (17) et à l'élément (21, 36) de palier à rotule ou de pivotement, ces pièces et éléments formant avec le patin (25) un ensemble unitaire.

## Fig. 1

## Fig. 2

Fig.3

Fig.4

EP 0 234 423 B1

Fig. 5

Fig. 6

Fig. 7

Fig. 8